# EUROPÄISCHE PATENTSCHRIFT

(11) **EP 2 574 227 B1**
(45) Veröffentlichungstag und Bekanntmachung des Hinweises auf die Patenterteilung: **25.02.2015**
(21) Anmeldenummer: 12175222.4
(22) Anmeldetag: 06.07.2012
(51) Int. Cl.: A01D 41/14, A01D 75/18, A01F 12/16, A01F 29/16

(54) **Selbstfahrende Erntemaschine**
Self-propelled harvester
Moissonneuse automobile

(30) Priorität: 30.09.2011 DE 102011054095
(43) Veröffentlichungstag der Anmeldung: 03.04.2013
(73) Patentinhaber: CLAAS Selbstfahrende Erntemaschinen GmbH, 33428 Harsewinkel (DE)
(72) Erfinder: Furmaniak, Jan, 48145 Münster (DE)

(56) Entgegenhaltungen:
- EP-A1- 1 064 834
- DE-A1- 19 940 467

## Beschreibung

Die vorliegende Erfindung betrifft eine selbstfahrende Erntemaschine gemäß dem Oberbegriff des Anspruches 1.

Selbstfahrende Erntemaschinen sind mit einer im frontseitigen Bereich der Erntemaschine angeordneten Einzugsvorrichtung ausgestattet, die der Zuführung von einer an der Einzugsvorrichtung anbringbaren Erntegutaufnahmevorrichtung aufgenommenem Erntegut in die Erntemaschine zu dessen weiterer Verarbeitung dient. Die Erntegutaufnahmevorrichtung ist von einer an der Einzugsvorrichtung angeordneten Antriebswelle antreibbar und durch eine Bremsvorrichtung abbremsbar.

Eine derartige Erntemaschine ist aus der DE 199 40 467 A1 bekannt. Darin ist eine landwirtschaftliche Erntemaschine beschrieben, die einen Schrägförderer aufweist, an dem eine Erntegutaufnahmevorrichtung anbringbar ist. Der Antrieb des Schrägförderers wie auch der Erntegutaufnahmevorrichtung erfolgt durch die Erntemaschine und ist von dieser durch eine Kupplung abtrennbar, die an einem ersten Ende der oberen Kettenradwelle des Schrägförderers angeordnet ist. An einem zweiten Ende der oberen Kettenradwelle ist eine Riemenscheibe befestigt, die durch einen Riemen eine Riemenscheibe an einer unteren Kettenradwelle des Schrägförderers treibt. Der unteren Kettenradwelle ist eine hydraulisch betätigbare Scheibenbremse zugeordnet, die ein Stillsetzen der Erntegutaufnahmevorrichtung bewirkt.

Als problematisch an der aus der DE 199 40 467 A1 bekannten Lösung ist der Einsatz einer Scheibenbremse anzusehen, da durch Funkenflug eine erhöhte Brandgefahr besteht. Zudem lässt die DE 199 40 467 A1 offen, wie der Bremsenaufbau im Detail aussehen könnte, insbesondere vor dem Hintergrund eines raum- und gewichtsoptimierten Aufbaus der Bremsvorrichtung. Weiterhin tritt bei einer freiliegenden Bremsscheibe das Problem der Korrosion auf, welche zu einer Verlängerung der Bremszeit führt, was insbesondere in Situationen, in denen eine schnellstmögliche Stillsetzung der Erntegutaufnahmevorrichtung erforderlich ist, Schäden an der Erntemaschine durch in diese eingebrachte Fremdkörper nach sich ziehen kann. Auch die EP 1064834 A1 offenbart eine freiliegende Scheibenbremse für den Schrägförderer gemäß Oberbegriff des Anspruchs 1.

Daher ist es Aufgabe der vorliegenden Erfindung, eine selbstfahrende Erntemaschine der eingangs genannten Art bereitzustellen, durch die die zuvor genannten Nachteile vermeidbar sind.

Die Aufgabe wird erfindungsgemäß durch die kennzeichnenden Merkmale des Anspruches 1 gelöst.

Vorteilhafte Weiterbildungen der selbstfahrenden Erntemaschine sind Gegenstand der Unteransprüche.

Gemäß Anspruch 1 wird vorgeschlagen, dass die Bremsvorrichtung als Trommelbremse mit einer Bremstrommel ausgeführt ist, in die zumindest eine Zusatzfunktion integriert ist. Der geschlossene Aufbau einer Trommelbremse verhindert das Auftreten von Funkenflug, wodurch die Brandgefahr deutlich verringert werden kann. Ebenso ist eine Trommelbremse weniger korrosionsanfällig. Durch die Integration zumindest einer Zusatzfunktion in die Bremstrommel der Trommelbremse wird der Anforderung an den raum- und gewichtsoptimierten Aufbau der Bremsvorrichtung an der Einzugsvorrichtung Rechnung getragen. Zudem reduziert die Integration einer Zusatzfunktion in die Bremsvorrichtung den erforderlichen Montageaufwand.

Vorzugsweise kann die Zusatzfunktion in der Reversierfunktion der Einzugsvorrichtung und der Erntegutaufnahmevorrichtung bestehen. Die Reversierfunktion des Antriebes der Einzugsvorrichtung sowie der Erntegutaufnahmevorrichtung ist notwendig, um bei einem auftretenden Gutstau in der Erntegutaufnahmevorrichtung und/oder der Einzugsvorrichtung diesen beseitigen zu können.

Weiterhin kann die Bremsvorrichtung einen Lagerflansch aufweisen, der als Wellenlagerung und der Aufnahme der Komponenten der Bremsvorrichtung dient. Der den konstruktiven Kern der Bremsvorrichtung bildende Lagerflansch trägt maßgeblich zu der angestrebten Funktionsintegration bei und ermöglicht eine universelle Einsetzbarkeit der Bremsvorrichtung sowohl an Mähdreschern als auch an Feldhäckslern.

Insbesondere kann die Bremsvorrichtung durch einen hydraulisch beaufschlagbaren Bremszylinder ansteuerbar sein. Somit ist ein schnelles Ansprechen der Bremsvorrichtung erreichbar. Die Integration in den an der Einzugsvorrichtung bereits vorhandenen Hydraulikkreislauf ist zudem kostengünstig.

Des Weiteren kann als Reversierantrieb ein auf die Bremstrommel aufgeformtes Zahnrad vorgesehen sein, welches für die Reversierfunktion mit einem durch einen Hydraulikzylinder betätigbares Ritzel in Eingriff bringbar ist. Die Reversierfunktion kommt bei einer Verstopfung der Erntegutaufnahmevorrichtung und/oder der Einzugsvorrichtung zum Einsatz, um Erntegut, welches die Erntegutaufnahmevorrichtung und/oder die Einzugsvorrichtung blockiert, aus diesen hinauszubefördern.

Vorteilhafterweise kann die Bremsvorrichtung am Ende eines die Einzugsvorrichtung antreibenden Antriebsstranges angeordnet sein. Hierbei sollte die Anordnung in unmittelbarer Nähe zu den abzubremsenden Aggregaten erfolgen. Dadurch lässt sich ein schnelles und direktes Abbremsen der Einzugsvorrichtung sowie der Erntegutaufnahmevorrichtung erreichen. Zudem wird durch diese Anordnung die Belastung des Antriebsstranges deutlich reduziert, da eine Einleitung von Querkräften entfällt.

In bevorzugter Weiterbildung kann die Zusatzfunktion in der Ausführung der Bremstrommel als ein Antriebselement bestehen.

Hierzu kann das Antriebselement als eine auf die Bremstrommel aufgeformte Riemenscheibe ausgeführt sein.

Die Erfindung wird nachstehend an in den Zeichnungen dargestellten Ausführungsbeispielen näher erläutert.

In den zugehörigen Zeichnungen zeigen:
- Fig. 1: eine schematische Seitenansicht eines Mähdreschers;
- Fig. 2: eine Seitenansicht einer Einzugsvorrichtung des Mähdreschers gemäß Fig. 1;
- Fig. 3: eine Detailansicht einer Bremsvorrichtung der Einzugsvorrichtung;
- Fig. 4: eine Schnittansicht entlang der Linie II-II gemäß Fig. 2;
- Fig. 5: eine Seitenansicht einer Antriebsvorrichtung für eine Einzugsvorrichtung;
- Fig. 6: eine Schnittansicht entlang der Linie V-V gemäß Fig. 5;

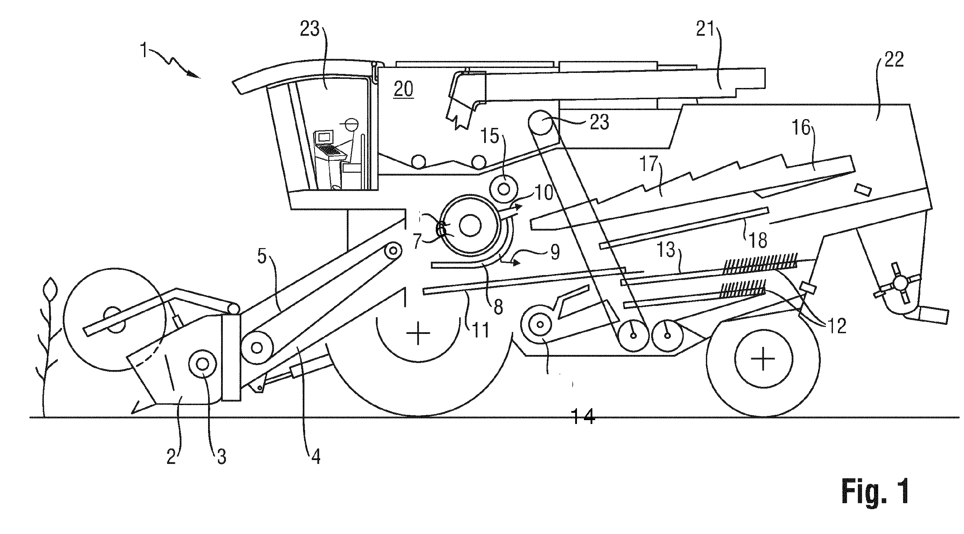

Der in Fig. 1 schematisch dargestellte Mähdrescher 1 besteht aus einem mit dem Fahrwerk verbundenen Traggestell, auf dem ein mehrteiliges Maschinengehäuse 22 befestigt ist. Um den Fahrer des Mähdreschers 1 vor belastenden Umwelteinflüssen zu schützen, ist im frontseitigen Bereich eine geschlossene Fahrerkabine 23 angeordnet. Der Mähdrescher 1 nimmt eine Erntegutaufnahmevorrichtung in Form eines Getreideschneidwerkes 2 auf, welches in an sich bekannter Weise mit einer Einzugsvorrichtung in Form eines Schrägförderers 4 an dem Mähdrescher 1 verbunden ist. Das Querförderorgan 3 des Schneidwerkes 2 übergibt das Erntegut an den Schrägförderer 4, wobei dieser das Erntegut durch einen umlaufenden Kettenförderer 5 in seinem obenseitigen rückwärtigen Bereich an das Dreschwerk 6 des Mähdreschers 1 übergibt. In dem Dreschwerk 6 wird das Erntegut zwischen der Dreschtrommel 7 und einem diese wenigstens teilweise ummantelnden Dreschkorb 8 hindurchgeführt und in zumindest zwei Teilströme 9, 10 getrennt. Der erste Teilstrom 9 besteht im Wesentlichen aus Körnern, Kurzstroh und Spreu und wird über einen Vorbereitungsboden 11 unmittelbar einer aus verschiedenen Siebebenen 12 bestehenden Reinigungseinrichtung 13 zugeführt. Die Reinigungseinrichtung 13 nimmt zudem ein Reinigungsgebläse 14 auf, das einen die Siebebenen 12 durchsetzenden Luftstrom generiert.

Der im rückwärtigen Bereich des Dreschwerks 6 aus diesem austretende Teilstrom 10, der im Wesentlichen aus Stroh und einem Restkornanteil besteht. wird durch eine Strohleittrommel 15 auf ein als Hordenschüttler 16 ausgeführtes Abscheideorgan 17 geleitet. Durch die Bewegung des Hordenschüttlers 16 wird ein großer Anteil der in der Strohschicht enthaltenen Körner auf dem Hordenschüttler 16 abgeschieden und über einen sogenannten Rücklaufboden 18 und den Vorbereitungsboden 11 an die Reinigungseinrichtung 13 übergeben. In der Reinigungseinrichtung 13 wird schließlich aus den in sie eingeleiteten verschiedenen Gutströmen ein gereinigter Körnerstrom durch eine Fördereinrichtung 23 in einen Korntank 20 gefördert und dort zwischengespeichert. Die Entleerung des Korntanks 20 erfolgt in der Regel mittels eines Korntankentleerförderers 21.

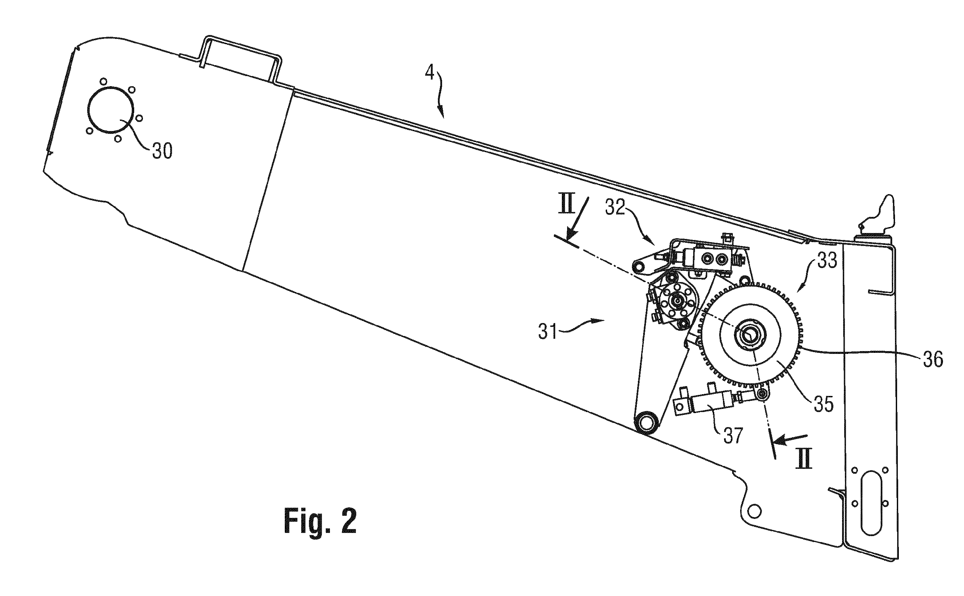

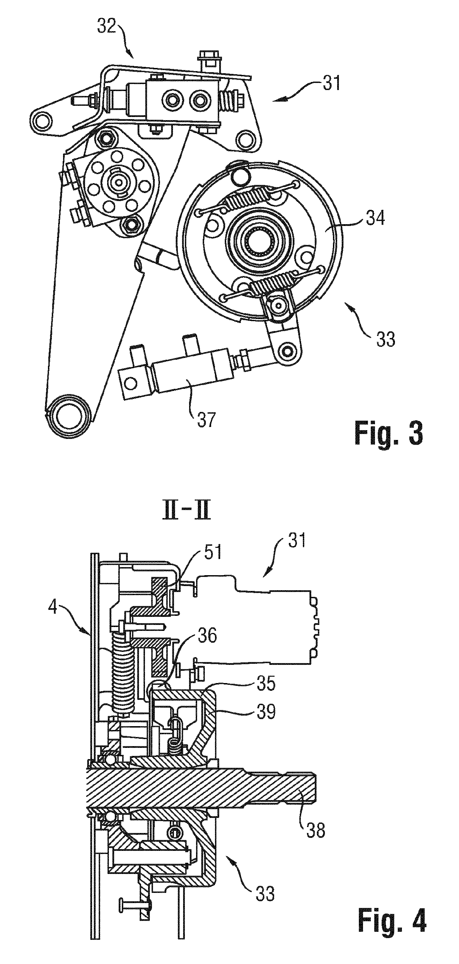

Die Darstellung in Fig. 2 zeigt eine Seitenansicht der als Schrägförderer 4 ausgeführten Einzugsvorrichtung des Mähdreschers 1 gemäß Fig. 1. Der Schrägförderer 4 ist mit einem Ende am Mähdrescher 1 angeordnet während das gegenüberliegende Ende der Aufnahme des Schneidwerkes 2 dient. Für das Antreiben des Schrägförderers 4 sowie des Schneidwerkes 2 weist der Schrägförderer 4 antreibbare Wellen auf, die jeweils in Endbereichen des Schrägförderers 4 quer zu dessen Längsachse angeordnet sind. In dem dem Mähdrescher 1 zugewandten Endbereich des Schrägförderers 4 ist die Position einer ersten, dem Antrieb des Schrägförderers 4 dienende Welle durch eine Öffnung 30 in der Seitenwand der Schrägförderers 4 angedeutet. In dem gegenüberliegenden Endbereich befindet sich eine der Reversierung des Schrägförderers 4 und des Schneidwerkes 2 dienende Reversiervorrichtung 31. Die zur Ausführung der Reversierfunktion dienende Reversiervorrichtung 31 umfasst eine Hebelanordnung 32, die hydraulisch betätigbar ist, sowie ein Zahnrad 51, welches in Fig. 4 dargestellt ist. Die Reversiervorrichtung 31 wirkt bei ihrer Betätigung mit einer Bremsvorrichtung 33 zusammen, in die zumindest eine Zusatzfunktion integriert ist. In dem in Fig. 2 dargestellten Ausführungsbeispiel weist die als Trommelbremse 34 mit einer Bremstrommel 35 ausgeführte Bremsvorrichtung 33 ein auf der Bremstrommel 35 aufgeformtes Zahnrad 36 auf, welches mit dem Zahnrad 51 an der Hebelanordnung 32 der Reversiervorrichtung 31 in Eingriff bringbar ist, um ein Reversieren des Schrägförderers 4 sowie des Schneidwerkes 2 zur Behebung eines Gutstaues zu erreichen.

Die Trommelbremse 34 ist, wie aus der Detailansicht gemäß Fig. 3 ersichtlich ist, durch einen hydraulischen Aktor 37 betätigbar, um die dem Antrieb des Schneidwerkes 2 dienende Welle schnellstmöglich abzubremsen, wenn beispielsweise Fremdkörper vom Schneidwerk 2 aufgenommen werden könnten, die zu Schäden am Schneidwerk 2 oder an den Arbeitsorganen des Mähdreschers 1 führen könnten. Die Anordnung der Bremsvorrichtung 33 in unmittelbarer Nähe des Schneidwerkes 2 ist insofern von Vorteil, als dass das Schneidwerk 2 schneller und direkter abgebremst werden kann.

In Fig. 4 ist eine Schnittansicht der Bremsvorrichtung 33 entlang der Linie II-II dargestellt. Dieser Ansicht ist der innere Aufbau der Bremsvorrichtung 33 zu entnehmen. Die Bremsvorrichtung 33 ist mittels eines Lagerflansches 39 auf einer sich quer zur Längsrichtung des Schrägförderers 4 erstreckenden Welle 38 angeordnet. Der Lagerflansch 39 dient neben der Anordnung der Bremsvorrichtung 33 auf der Welle 38 auch der Aufnahme der einzelnen Komponenten der Bremsvorrichtung 33, wie der Trommelbremse 34, und bildet zudem die Bremstrommel 35 sowie das auf die Bremstrommel 35 aufgeformte Zahnrad 36 aus. Die Integration vieler unterschiedlicher Funktionalitäten in ein einzelnes Bauteil führt zu einer hohen Funktionsdichte und damit einhergehend zu einer raumsparenden Bauweise. Damit einhergehend sinkt auch der Montageaufwand.

Weiterhin ist der Darstellung ein Zahnrad 51 zu entnehmen, welches durch den angedeuteten Hydraulikantrieb mit dem Zahnrad 36 auf der Bremstrommel 35 in Eingriff bringbar ist, um ein Reversieren des Antriebs des Schrägförderers 4 und des Schneidwerkes 2 zu erreichen, wenn ein Erntegutstau in diesen auftritt.

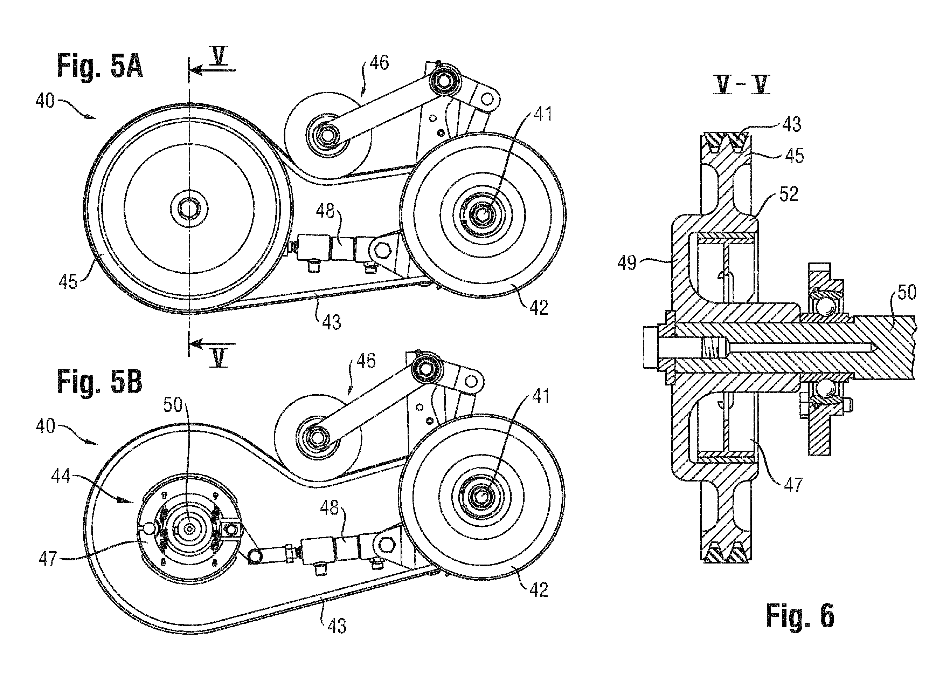

Die Darstellungen in den Fig. 5A und 5B zeigen jeweils eine Seitenansicht einer Antriebsvorrichtung 40 für eine Einzugsvorrichtung eines selbstfahrenden Feldhäckslers, die auch an einem Mähdrescher einsetzbar ist. Über zwei Riemenscheiben 42, 45 geführt läuft ein Riemen 43 um, welcher der Übertragung eines Drehmomentes auf die Aggregate der Einzugsvorrichtung dient. Das Drehmoment wird von einem im Heckbereich des selbstfahrenden Feldhäckslers angeordneten Motor bereitgestellt und über einen ersten, nicht dargestellten Riemenantrieb auf eine die Messertrommel tragende Welle 41 übertragen und von dieser über die auf der Welle 41 befestigte Riemenscheibe 42 auf die Einzugsvorrichtung. Der Riemen 43 wird durch eine mit einer hydraulisch betätigbaren Andruckrolle versehenen Spannvorrichtung 46 beaufschlagt. Die Spannvorrichtung 46 wird als Kupplung verwendet, um im Fall eines Schnellstops der Antriebsvorrichtung 40 die von der Spannrolle auf den Riemen 43 aufgebrachte Vorspannung zu lösen, wodurch der Riemen 43 durchrutschen kann.

In Fig. 5B ist die Riemenscheibe 45 nicht dargestellt, so dass eine Bremsvorrichtung 44 sichtbar ist, welche die Riemenscheibe 45 als Bestandteil umfasst. Die Bremsvorrichtung 44 ist als Trommelbremse 47 ausgeführt, auf deren Bremstrommel die Riemenscheibe 45 aufgeformt ist. Die Trommelbremse 47 ist, wie weiter oben bereits beschrieben wurde, hydraulisch betätigbar. Hierzu ist ein hydraulischer betätigbarer Aktor 48 an der Einzugsvorrichtung des Feldhäckslers angeordnet.

Die Darstellung gemäß Fig. 6 zeigt eine Schnittansicht entlang der Linie V-V gemäß Fig. 5A. Aus dieser Darstellung wird der innere Aufbau der Bremsvorrichtung 44 mit integrierter Zusatzfunktion ersichtlich. Die Bremsvorrichtung 44 ist von einem Lagerflansch 49 getragen auf einer Welle 50 angeordnet. Wie bereits für die Bremseinrichtung 33 des Mähdreschers 1 beschreiben, trägt auch bei diesem Ausführungsbeispiel der Lagerflansch 49 alle Komponenten der Bremsvorrichtung 44 und bildet dessen Bremstrommel 52. Der Lagerflansch 49 unterscheidet sich von demjenigen Lagerflansch 39, der Teil der Bremsvorrichtung 33 am Schrägförderer 4 des Mähdreschers 1 ist, dadurch, dass auf diesen anstelle eines auf die Bremstrommel 35 aufgeformten Zahnrades 36 eine Riemenscheibe 45 auf die Bremstrommel 52 aufgeformt ist, um die Zusatzfunktion eines Antriebsmittels zu übernehmen. Im Übrigen sind der Lagerflansch 39 des Mähdreschers und der Lagerflansch 49 des Feldhäckslers in ihrem Aufbau gleich ausgeführt.

**Bezugszeichenliste**

| | | | |
|---|---|---|---|
| 1 | Mähdrescher | 30 | Öffnung |
| 2 | Schneidwerk | 31 | Reversiervorrichtung |
| 3 | Querförderorgan | 32 | Hebelanordnung |
| 4 | Schrägförderer | 33 | Bremsvorrichtung |
| 5 | Kettenförderer | 34 | Trommelbremse |
| 6 | Dreschwerk | 35 | Bremstrommel |
| 7 | Dreschtrommel | 36 | Zahnrad |
| 8 | Dreschkorb | 37 | hydraulischer Aktor |
| 9 | erster Teilstrom | 38 | Welle |
| 10 | zweiter Teilstrom | 39 | Lagerflansch |
| 11 | Vorbereitungsboden | 40 | Antriebsvorrichtung |
| 12 | Siebebenen | 41 | Welle |
| 13 | Reinigungseinrichtung | 42 | Riemenscheibe |
| 14 | Reinigungsgebläse | 43 | Riemen |
| 15 | Strohleitelement | 44 | Bremsvorrichtung |
| 16 | Hordenschüttler | 45 | Riemenscheibe |
| 17 | Abscheideorgan | 46 | Spannvorrichtung |
| 18 | Rücklaufboden | 47 | Trommelbremse |
| 19 | Fördereinrichtung | 48 | hydraulischer Aktor |
| 20 | Korntank | 49 | Lagerflansch |
| 21 | Korntankentleerförderer | 50 | Welle |
| 22 | Maschinengehäuse | 51 | Zahnrad |
| 23 | Fahrerkabine | 52 | Bremstrommel |

## Patentansprüche

1. Selbstfahrende Erntemaschine (1) mit einer im frontseitigen Bereich der Erntemaschine (1) angeordneten Einzugsvorrichtung (4), an der eine Erntegutaufnahmevorrichtung (2) anbringbar ist, die von einer an der Einzugsvorrichtung (4) angeordneten Antriebswelle antreibbar und durch eine Bremsvorrichtung (33, 44) abbremsbar ist, **dadurch gekennzeichnet, dass** die Bremsvorrichtung (33, 44) als Trommelbremse (34, 47) mit einer Bremstrommel (35, 52) ausgeführt ist, in die zumindest eine Zusatzfunktion integriert ist.

2. Selbstfahrende Erntemaschine (1) nach Anspruch 1, **dadurch gekennzeichnet, dass** die Zusatzfunktion in der Reversierfunktion der Erntegutaufnahmevorrichtung (2) und der Einzugsvorrichtung (4) besteht.

3. Selbstfahrende Erntemaschine (1) nach einem der Ansprüche 1 oder 2, **dadurch gekennzeichnet, dass** die Bremsvorrichtung (33, 44) einen Lagerflansch (39, 49) aufweist, der als Wellenlagerung und der Aufnahme der Komponenten der Bremsvorrichtung (33, 44) dient.

4. Selbstfahrende Erntemaschine (1) nach Anspruch 3,
**dadurch gekennzeichnet, dass**
der Lagerflansch (39, 48) die Bremstrommel (35, 52) der Bremsvorrichtung (33, 44) bildet.

5. Selbstfahrende Erntemaschine (1) nach einem der Ansprüche 1 bis 4, **dadurch gekennzeichnet, dass** die Bremsvorrichtung (33, 44) durch einen hydraulisch beaufschlagbaren Aktor (37) ansteuerbar ist.

6. Selbstfahrende Erntemaschine (1) nach einem der Ansprüche 2 bis 5, **dadurch gekennzeichnet, dass** für die Realisierung der Reversierfunktion ein auf die Bremstrommel (35) aufgeformtes Zahnrad (36) vorgesehen ist, welches zum Reversieren mit einem durch einen Hydraulikantrieb betätigbaren Zahnrad (51) in Eingriff bringbar ist.

7. Selbstfahrende Erntemaschine (1) nach einem der Ansprüche 1 bis 6, **dadurch gekennzeichnet, dass** die Bremsvorrichtung (33, 44) am Ende eines die Einzugsvorrichtung (4) antreibenden Antriebsstranges angeordnet ist.

8. Selbstfahrende Erntemaschine (1) nach Anspruch 1, **dadurch gekennzeichnet, dass** die Zusatzfunktion in der Ausführung der Bremstrommel (52) als ein Antriebselement (45) besteht.

9. Selbstfahrende Erntemaschine nach Anspruch 8, **dadurch gekennzeichnet, dass** das Antriebselement als eine auf die Bremstrommel (52) aufgeformte Riemenscheibe (45) ausgeführt ist.

## Claims

1. A self-propelled harvester (1) having an intake device (4) which is arranged in the front region of the harvester (1) and to which a crop material pickup device (2) can be mounted, which is drivable by a drive shaft arranged on the intake device (4) and can be braked by a brake device (33, 34) **characterised in that** the brake device (33, 34) is in the form of a drum brake (34, 47) with a brake drum (35, 52) into which at least one additional function is integrated.

2. A self-propelled harvester (1) according to claim 1 **characterised in that** the additional function involves the reversing function of the crop material pick-up device (2) and the intake device (4).

3. A self-propelled harvester (1) according to one of claims 1 and 2 **characterised in that** the brake device (33, 44) has a mounting flange (39, 49) which serves as a shaft mounting and for receiving the components of the brake device (33, 44).

4. A self-propelled harvester (1) according to claim 3 **characterised in that** the mounting flange (39, 48) forms the brake drum (35, 52) of the brake device (33, 44).

5. A self-propelled harvester (1) according to one of claims 1 to 4 **characterised in that** the brake device (33, 44) is actuable by a hydraulically operable actuator (37).

6. A self-propelled harvester (1) according to one of claims 2 to 5 **characterised in that** for implementing the reversing function there is provided a gear (36) which is formed on the brake drum (35) and which can be brought into engagement with a gear (51) actuable by a hydraulic drive for the reversing function.

7. A self-propelled harvester (1) according to one of claims 1 to 6 **characterised in that** the brake device (33, 44) is arranged at the end of a drive train driving the intake device (4).

8. A self-propelled harvester (1) according to claim 1 **characterised in that** the additional function involves designing the brake drum (52) as a drive element (45).

9. A self-propelled harvester according to claim 8 **characterised in that** the drive element is in the form of a belt pulley (45) formed on the brake drum (52).

## Revendications

1. Machine de récolte automotrice (1) comprenant un dispositif d'alimentation (4) qui est disposé dans la zone avant de la machine de récolte (1) et sur lequel peut être monté un dispositif récepteur de produit récolté (2), lequel peut être entraîné par un arbre d'entraînement disposé sur le dispositif d'alimentation (4) et peut être freiné par un dispositif de freinage (33, 34), **caractérisée en ce que** le dispositif de freinage (33, 34) est conformé en frein à tambour (34, 47) avec un tambour de frein (35, 52) auquel est intégrée au moins une fonction supplémentaire.

2. Machine de récolte automotrice (1) selon la revendication 1, **caractérisée en ce que** la fonction supplémentaire réside dans la fonction réversible du dispositif récepteur de produit récolté (2) et du dispositif d'alimentation (4).

3. Machine de récolte automotrice (1) selon une des revendications 1 ou 2, **caractérisée en ce que** le dispositif de freinage (33, 34) comporte une bride de montage (39, 49) qui sert de palier d'arbre et à recevoir les composants du dispositif de freinage (33, 44).

4. Machine de récolte automotrice (1) selon la revendication 3, **caractérisée en ce que** la bride de montage (39, 48) forme le tambour de frein (35, 52) du dispositif de freinage (33, 44).

5. Machine de récolte automotrice (1) selon une des revendications 1 à 4, **caractérisée en ce que** le dispositif de freinage (33, 44) est commandable par l'intermédiaire d'un actionneur à sollicitation hydraulique (37).

6. Machine de récolte automotrice (1) selon une des revendications 2 à 5, **caractérisée en ce que**, pour réaliser la fonction réversible, il est prévu une roue dentée (36) qui est moulée sur le tambour de frein (35) et qui, pour la réversion, peut être amenée en prise avec une roue dentée (51) actionnable par l'intermédiaire d'un moyen d'entraînement hydraulique.

7. Machine de récolte automotrice (1) selon une des revendications 1 à 6, **caractérisé en ce que** le dispositif de freinage (33, 44) est disposé à l'extrémité d'une chaîne de transmission entraînant le dispositif d'alimentation (4).

8. Machine de récolte automotrice (1) selon la revendication 1, **caractérisée en ce que** la fonction supplémentaire réside dans la conception du tambour de frein (52) sous la forme d'un élément d'entraînement (45).

9. Machine de récolte automotrice selon la revendication 8, **caractérisée en ce que** l'élément d'entraînement est conçu sous la forme d'une poulie à courroie (45) moulée sur le tambour de frein (52).
